# EUROPEAN PATENT APPLICATION

(11) **EP 1 755 326 A1**
(43) Date of publication of application: **21.02.2007**
(21) Application number: 06017158.4
(22) Date of filing: 17.08.2006
(51) Int. Cl.: H04N 1/00, H04N 5/44

(54) **Method of transmitting captured image in digital broadcasting reception terminal**

(30) Priority: 17.08.2005 KR 20050075296
(71) Applicant: Samsung Electronics Co., Ltd., Yeongtong-gu Suwon-si, Gyeonggi-do (KR)
(72) Inventor: Kim, Kang-Wook, Yeongtong-gu Suwon-si Gyeonggi-do (KR)
(74) Representative: Lang, Johannes

(57) **Abstract**

A method of transmitting a captured image in a digital broadcasting reception terminal includes outputting (S120) digital broadcasting data being received as video and audio data in response to a digital broadcasting output request (S110) of a user; if a predetermined key is pressed (S130) while the digital broadcasting data is being output, capturing a broadcasting screen (S140) on which the video data is being output; and transmitting (S190) a still image of the captured broadcasting screen shot to a destination requested according to the user's transmission request. Accordingly, an image desired by a user can be captured in realtime while digital broadcasting is being output, and the captured image can be transmitted

## Description

### BACKGROUND OF THE INVENTION

### 1. Field of the Invention

The present invention relates generally to a digital broadcasting reception terminal, and in particular, to a method of capturing a broadcasting image desired by a user while digital broadcasting data is being output and transmitting the captured image.

### 2. Description of the Related Art

In general, digital broadcasting is a broadcasting service for providing high image quality, high sound quality, and a better service to subscribers by replacing conventional analog broadcasting, and is classified into satellite digital broadcasting and terrestrial digital broadcasting.

Satellite digital broadcasting has a main target of a mobile service and allows the subscribers to watch multi-channel multimedia broadcasting every time everywhere using a portable receiver (a mobile telephone or a personal digital assistant (PDA)) or a car receiver.

Terrestrial digital broadcasting derives from digital audio broadcasting (DAB), and provides multimedia broadcasting for mobile reception using a currently unused very high frequency (VHF) channel No. 12, and compositely transmits TV broadcasting, radio broadcasting, and data broadcasting using multi channels.

While each of existing terrestrial broadcasters operates a single analog channel, each of digital broadcasters can operate a plurality of digital channels. Such services using multi channels are called "Ensembles".

In terrestrial digital broadcasting, three Ensembles can be transmitted using a single VHF channel, an Ensemble providing a single channel for video, two channels for audio, and a single channel for data. Terrestrial digital broadcasting aims at broadcasting without pay, mainly considering its use in vehicles. In Korea, a total of eight broadcasters, including Korean Broadcasting System (KBS), Munhwa Broadcasting Corporation (MBC), Seoul Broadcasting System (SBS), Christian Broadcasting System (CBS), Yonhap Television News (YTN), and Digital SkyNet providing an audio channel to SkyLife, etc., are preparing for the business of terrestrial digital broadcasting.

Recently, accompanying the development of digital broadcasting technology and mobile communication technology, people have been greatly interested in a digital broadcasting service to watch digital broadcasting even while moving. In particular, people have been greatly interested in a digital multimedia broadcasting (DMB) service using a mobile terminal.

If a user can perform another desired operation while digital broadcasting is being output, many advantages exist in the interface side. In particular, the multi-tasking concept without interrupting the output of broadcasting while digital broadcasting is being output is considered very important to maintaining the continuity of a one-way broadcasting service.

However, at the present, while digital broadcasting is being output, the transmission of a short message or call reception/transmission is available, but capturing an image and transmitting the captured image in realtime is not available.

Thus, if a method of capturing an image and transmitting the captured image in realtime while digital broadcasting is being output is provided, it is predicted that the demand of users who want to inform other people of a specific entertainer, an exciting scene in sports broadcasting, or a highlight scene in a drama while watching the digital broadcasting can be satisfied.

### SUMMARY OF THE INVENTION

An object of the present invention is to substantially solve at least the above problems and/or disadvantages and to provide at least the advantages below. Accordingly, an object of the present invention is to provide a method of transmitting a captured image in a digital broadcasting reception terminal, by which a user can capture a desired broadcasting screen shot and transmit the captured image while digital broadcasting is being output.

According to one aspect of the present invention, there is provided a method of transmitting a captured image in a digital broadcasting reception terminal, the method including outputting digital broadcasting data being received as video and audio data in response to a digital broadcasting output request of a user; if a predetermined key is pressed while the digital broadcasting data is being output, capturing a broadcasting screen on which the video data is being output; and transmitting a still image of the captured broadcasting screen shot to a destination requested according to the user's transmission request.

### BRIEF DESCRIPTION OF THE DRAWINGS

The above and other objects, features and advantages of the present invention will become more apparent from the following detailed description when taken in conjunction with the accompanying drawings in which:
FIG. 1 is a block diagram of a digital broadcasting reception terminal according to the present invention;
FIG. 2 is a flowchart of a method of transmitting a captured image in a digital broadcasting reception terminal, according to a preferred embodiment of the present invention;
FIG. 3 is a flowchart of a method of transmitting a captured image in a digital broadcasting reception terminal, according to another preferred embodiment of the present invention; and
FIG. 4 illustrates a screen for explaining an operation of the digital broadcasting reception terminal according to the present invention.

### DETAILED DESCRIPTION OF THE PREFERRED EMBODIMENT

Preferred embodiments of the present invention will be described herein below with reference to the accompanying drawings. In the drawings, the same or similar elements are denoted by the same reference numerals even though they are depicted in different drawings. In the following description, well-known functions or constructions are not described in detail since they would obscure the invention in unnecessary detail.

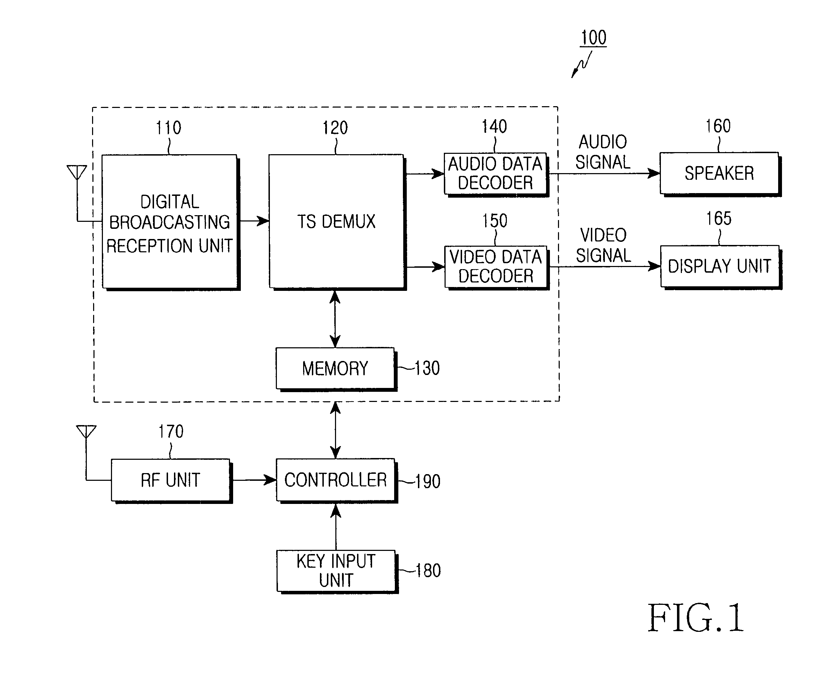

FIG. 1 is a block diagram of a digital broadcasting reception terminal 100 according to the present invention.

Referring to FIG. 1, the digital broadcasting reception terminal 100 includes a digital broadcasting reception unit 110, a transport stream (TS) demultiplexer 120, a memory 130, an audio data decoder 140, a video data decoder 150, a speaker 160, a display unit 165, a radio frequency (RF) unit 170, a key input unit 180, and a controller 190.

The controller 190 controls the digital broadcasting reception unit 110 to receive predetermined digital broadcasting data and transmit the received digital broadcasting data to the TS demultiplexer 120.

The TS demultiplexer 120 divides the received digital broadcasting data into an audio data stream and a video data stream by demultiplexing the received digital broadcasting data. The digital broadcasting data is demodulated to a digital data stream by a demodulator (not shown).

The memory 130 stores various kinds of information required to control an operation of the digital broadcasting reception terminal 100 according to the present invention. The controller 190 controls the memory 130 to store a still image of a broadcasting screen shot captured while the digital broadcasting data is being output. The memory 130 also may store the digital broadcasting data using a recording function.

The audio data decoder 140 receives the audio data stream from the TS demultiplexer 120, decodes the received audio data stream to an analog audio signal, and outputs the decoded analog audio signal to the speaker 160.

The video data decoder 150 receives the video data stream from the TS demultiplexer 120, decodes the received video data stream to an analog video signal, and outputs the decoded analog video signal to the display unit 165. The speaker 160 and the display unit 165 form an output unit in the digital broadcasting reception terminal 100.

The display unit 165 outputs various kinds of display data generated by the digital broadcasting reception terminal 100, and it is preferred that the display unit 165 includes a liquid crystal display (LCD) sufficiently supporting a resolution of the digital broadcasting data. If the LCD is implemented in a touch screen method, the display unit 165 may also operate as an input unit.

The controller 190 controls the RF unit 170 to transmit/receive voice data, character data, image data, and control data. To do this, the RF unit 170 includes an RF transmitter (not shown) up-converting a frequency of a signal to be transmitted and amplifying the frequency up-converted signal, and an RF receiver (not shown) low noise amplifying a received signal and down-converting a frequency of the low noise amplified signal. The RF unit 170 may include a modem (not shown) including a transmitter (not shown) encoding and modulating a signal to be transmitted and a receiver (not shown) decoding and demodulating a received signal.

The key input unit 180 receives a user operational signal, such as a key input or a voice input, and transmits the received user operational signal to the controller 190. According to the present invention, the key input unit 180 may set a key for a digital broadcasting output request and a key for a broadcasting screen capture among equipped keys or may separately include the keys.

The controller 190 controls a general operation of the digital broadcasting reception terminal 100 according to the present invention. The controller 190 also outputs digital broadcasting data received through the digital broadcasting reception unit 110 as video data and audio data through the output unit in response to the user's digital broadcasting output request, and if a predetermined key is pressed while the video data and audio data are being output, the controller 190 captures a broadcasting screen on which the video data is being output. The predetermined key indicates the key set for a broadcasting screen capture, and the output digital broadcasting data may be data stored in advance in the memory 130.

The controller 190 controls the RF unit 170 to transmit the still image of the captured broadcasting screen shot to a destination requested according to the user's transmission request. The destination may be a telephone number or an e-mail address of a receiving terminal.

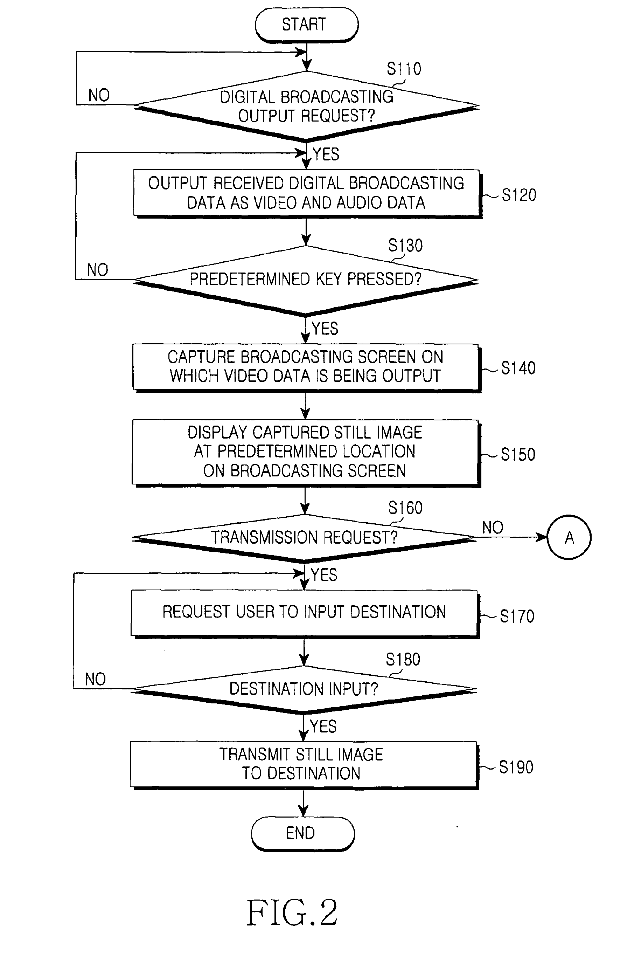

FIG. 2 is a flowchart of an operation of the digital broadcasting reception terminal 100, according to a preferred embodiment of the present invention.

Referring to FIGs. 1 and 2, the controller 190 determines in step S 110 whether a digital broadcasting output request is input by the user. The user can input the digital broadcasting output request using a digital broadcasting output request key or a broadcasting reproduction key included in the key input unit 180.

If the digital broadcasting output request is input, in step S120, the controller 190 receives relevant digital broadcasting data through the digital broadcasting reception unit 110, parses the received digital broadcasting data into video and audio data, and outputs the parsed video and audio data through the speaker 160 and the display unit 165.

In step S130, the controller 190 determines whether a predetermined key is pressed while the digital broadcasting data (i.e., the parsed video and audio data) is being output. If the predetermined key is pressed, in step S 140, the controller 190 captures a broadcasting screen shot of the digital broadcasting data being output through the display unit 165. The predetermined key indicates the key set for a broadcasting screen capture. The broadcasting screen capture indicates that the controller 190 temporarily stores a still image frame stored in an LCD frame buffer (not shown) of the display unit 165.

In step S 150, the controller 190 displays a still image of the captured broadcasting screen shot by overlaying the still image at a predetermined location on the broadcasting screen on which the video data is being output. It is preferred that the displayed still image be converted to a bitmap file format (BMP) and displayed. That is, the controller 190 displays the still image by capturing a digital broadcasting screen shot of a Moving Picture Experts Group (MPEG) format, compressing the captured digital broadcasting screen shot in a Joint Photographic Coding Experts Group (JPEG) format, and converting the compressed image of the JPEG format to a bitmap file of a graphic file format, which is a standard bit format. This is because an image of the MPEG format and an image of the JPEG format cannot be displayed on a broadcasting screen at the same time.

In addition, and by way of example, where the digital broadcasting screen has the size of 320*240 pixels, it is preferred that the still image of the captured broadcasting screen shot be displayed with the size of 96*96 pixels on the up-right side of the digital broadcasting screen.

Alternatively, the display unit 165 of the digital broadcasting reception terminal 100 includes a main LCD and a sub LCD, the controller 190 may control the display unit 165 to display the video data on the main LCD in realtime and display the still image of the captured broadcasting screen shot on the sub LCD.

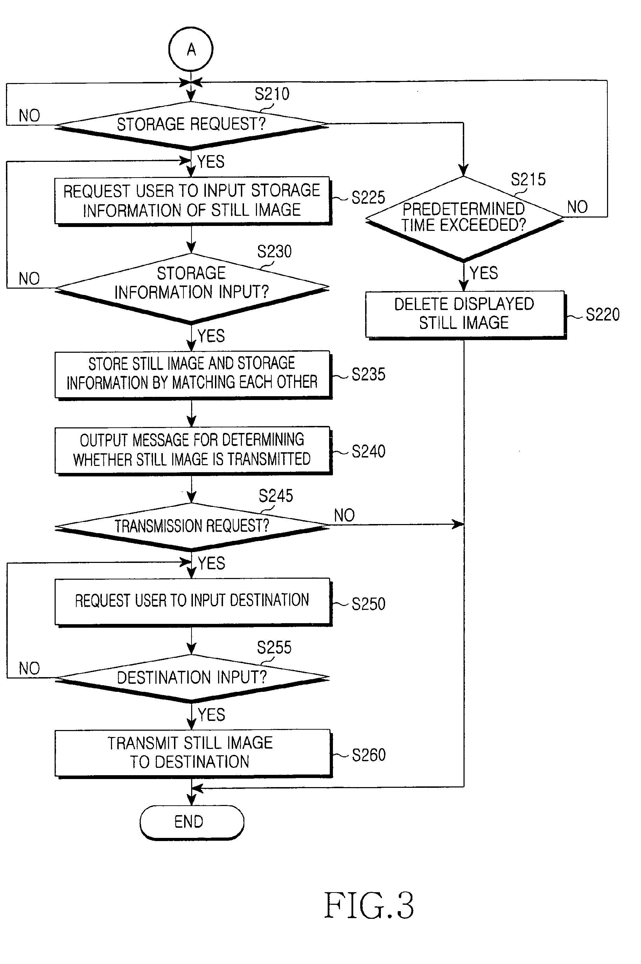

In step S 160, the controller 190 determines whether a transmission request of the displayed still image is input by the user. A case where the transmission request is not input will be described in detail with reference to FIG. 3.

If the transmission request is input, e.g., if a transmission key is pressed, in step S 170, the controller 190 requests the user to input a destination. The controller 190 may output the destination input request as voice through the speaker 160 or as a short message through the display unit 165. The destination may include a telephone number or an e-mail address of a receiving terminal.

In step S 180, the controller 190 determines whether the destination is input by the user. If the destination is input, in step S190, the controller 190 transmits the displayed still image to the destination. It is preferred that the controller 190 transmits the still image of the captured broadcasting screen shot through a 1x Evolution-Data Only (EV-DO) channel supporting a high speed data transmission service. In addition, it is preferred that the controller 190 displays a transmission proceeding rate indicating a transmission proceeding status in a bar format at a predetermined location on the broadcasting screen on which the video data is being output so that the user can easily check the transmission proceeding status when the still image is being transmitted.

FIG. 3 is a flowchart of an operation of the digital broadcasting reception terminal 100, according to another preferred embodiment of the present invention.

Referring to FIGs. 1 and 3, after displaying the still image of the captured broadcasting screen shot at the predetermined location on the broadcasting screen on which the video data is being output in step 150 of FIG. 2, if transmission is not requested in step S160, then in step S210, the controller 190 determines whether a storage request of the displayed still image is input by the user. When the still image is displayed at the predetermined location on the broadcasting screen, the controller 190 may output a message of asking whether the user wants to store the displayed still image.

If the storage request or the transmission request is not input for a predetermined time in step S215, it is preferred that the controller 190 deletes the still image displayed on the display unit 165 in step S220.

If the storage request of the displayed still image is input by the user, in step S225, the controller 190 requests the user to input storage information of the still image. It is preferred that the storage information includes a channel number, a program name, and the contents of the broadcasting of which the still image is captured so that a user at the destination side, which has received the still image, can effectively know information on the still image.

If the storage information is input based on user input information in step S230, the controller 190 stores the still image in a predetermined area of the memory 130 by matching it to the storage information in step S235.

In step S240, the controller 190 outputs a message for determining whether the still image stored in the memory 130 is to be transmitted. That is, the controller 190 outputs a message of asking the user whether the still image is to be transmitted, through the speaker 160 or the display unit 165.

In step S245, the controller 190 determines whether a transmission response against the message output (e.g., an "OK" key input) or a separate transmission request (e.g., a transmission key input) exists.

If the transmission response or the transmission request is input, in step S250, the controller 190 requests the user to input a destination. The controller 190 may output the destination input request as voice through the speaker 160 or as a short message through the display unit 165.

In step S255, the controller 190 determines whether the destination is input by the user. If the destination is input, in step S260, the controller 190 transmits the captured still image to the destination. It is preferred that the controller 190 transmits the still image of the captured broadcasting screen shot through a 1x Evolution-Data Only (EV-DO) channel supporting the high speed data transmission service. In addition, It is preferred that the controller 190 displays a transmission proceeding rate indicating a transmission proceeding status of the still image in a bar format at a predetermined location on the broadcasting screen on which the video data is being output.

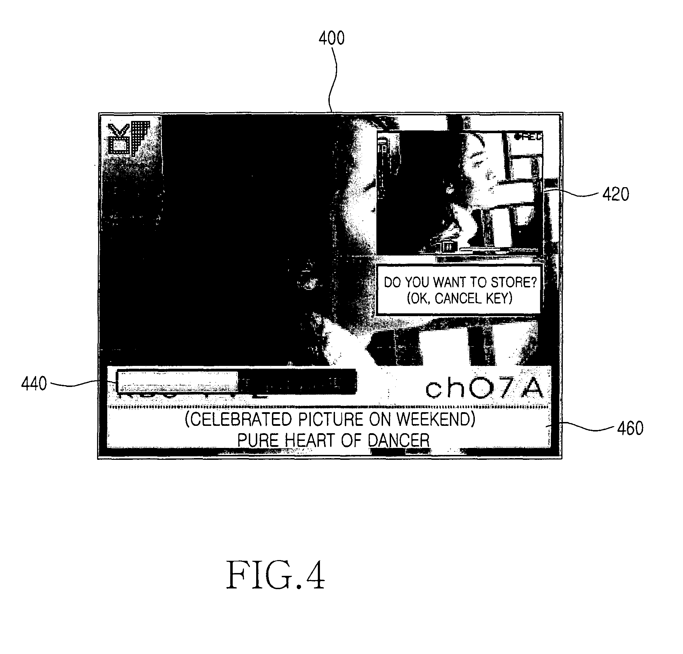

FIG. 4 illustrates a screen for explaining an operation of the digital broadcasting reception terminal 100 according to the present invention. Referring to FIG. 4, FIG. 4 illustrates a screen 400 on which the digital broadcasting reception terminal 100 is outputting a digital broadcasting program of a predetermined channel (e.g., CH 7).

In FIG. 4, if the key set for a broadcasting screen capture is pressed by the user, the digital broadcasting reception terminal 100 captures a currently output screen shot 400 and displays the captured screen shot 400 as a still image 420.

The user can store or delete the displayed still image 420 by pressing the "OK" key or the "cancel" key, and when the still image 420 is transmitted to a predetermined destination, a transmission proceeding rate 440 can be indicated in a bar format.

In addition, when the displayed still image 420 is stored, the digital broadcasting reception terminal 100 can generate and display an input window 460 so that storage information of the captured still image can be input. A broadcasting channel number, a broadcasting program name, and the contents of the broadcasting can be input in the input window 460.

While a still image is illustrated as a concrete embodiment in the description of the invention, however, the invention can be applied to a moving picture or audio data. In this case, after the step of determining whether the moving picture or audio data is stored in a form of preview or pre-listening, the procedures thereafter can be performed the same as the above-description.

As described above, according to the present invention, an image desired by a user can be captured in realtime while digital broadcasting is being output, and the captured image can be transmitted. Thus, the user can easily inform other people of a specific entertainer, an exciting scene in sports broadcasting, or a highlight scene in a drama while watching the digital broadcasting.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A method of transmitting a captured image in a digital broadcasting reception terminal, the method comprising the steps of:
outputting digital broadcasting data being received as video and audio data in response to a digital broadcasting output request of a user;
if a predetermined key is pressed while the digital broadcasting data is being output, capturing a broadcasting screen shot on which the video data is being output; and
transmitting a still image of the captured broadcasting screen shot to a destination requested according to the user's transmission request.

2. The method of claim 1, wherein the predetermined key is a pre-set key to capture a broadcasting screen on which the video data is being output.

3. The method of claim 1, wherein the destination includes a telephone number or an e-mail address of a receiving terminal.

4. The method of claim 1, further comprising the step of displaying the still image of the captured broadcasting screen shot by overlaying the still image at a predetermined location on the broadcasting screen on which the video data is being output.

5. The method of claim 4, wherein, in the step of displaying, the still image of the captured broadcasting screen shot is converted to a bitmap file and displayed.

6. The method of claim 4, further comprising the steps of:
if a storage request of the displayed still image is input by the user, requesting storage information of the displayed still image to be input;
if the storage information is input, storing the displayed still image by matching it to the input storage information; and
outputting a message for determining whether the stored still image is to be transmitted.

7. The method of claim 6, wherein the storage information includes a channel number, a program name, and the contents of the broadcasting of which the still image is captured.

8. The method of claim 1, wherein, in the step of transmitting, the still image of the captured broadcasting screen shot is transmitted through a 1x Evolution-Data Only (EV-DO) channel supporting a high speed data transmission service.

9. The method of claim 1, wherein the step of transmitting comprises the steps of:
if a transmission request of the captured broadcasting screen shot is input by the user, requesting the user to input a destination for transmitting the still image of the captured broadcasting screen shot; and
if the destination is input, transmitting the still image to the destination.

10. The method of claim 9, wherein the step of transmitting comprises displaying a transmission proceeding rate indicating a transmission proceeding status at a predetermined location on the broadcasting screen on which the video data is being output when the still image is transmitted.
